# EUROPÄISCHE PATENTSCHRIFT

(11) **EP 2 482 147 B1**
(45) Veröffentlichungstag und Bekanntmachung des Hinweises auf die Patenterteilung: **16.10.2013**
(21) Anmeldenummer: 11152705.7
(22) Anmeldetag: 31.01.2011
(51) Int. Cl.: G05B 19/04

(54) **Verfahren zur Anpassung der Taktfrequenz eines Mikroprozessors einer industriellen Automatisierungskomponente, und Automatisierungskomponente mit einem Mikroprozessor mit veränderlicher Taktfrequenz**
Method for adjusting the clock frequency of a microprocessor of an industrial automation component and automation component with a microprocessor with adjustable clock frequency
Procédé d'adaptation de la fréquence de cadence d'un microprocesseur d'un composant d'automatisation industriel et composants d'automatisation dotés d'un microprocesseur ayant une fréquence de cadence modifiable

(43) Veröffentlichungstag der Anmeldung: 01.08.2012
(73) Patentinhaber: Siemens Aktiengesellschaft, 80333 München (DE)
(72) Erfinder: Neumann, Günter, 91336 Heroldsbach (DE)

(56) Entgegenhaltungen:
- US-A1- 2002 099 964
- US-B1- 6 298 448

## Beschreibung

Die Erfindung betrifft ein Verfahren zur Anpassung der Taktfrequenz eines Mikroprozessors einer industriellen Automatisierungskomponente gemäß dem Oberbegriff des Patentanspruchs 1, und eine Automatisierungskomponente gemäß dem Oberbegriff des Patentanspruchs 9.

In industriellen Automatisierungsanordnungen werden zumeist eine Vielzahl an Automatisierungskomponenten betrieben, welche oft auch als speicherprogrammierbare Steuerungen (SPS) oder "CPU" o.ä. bezeichnet werden, wobei es sich dabei regelmäßig um mikroprozessorgesteuerte Rechnereinheiten handelt, die über Sensoren und Aktoren, kurz IO's, einen Fertigungsprozess oder eine andere Automatisierungsaufgabe steuern. In den gebräuchlichen Automatisierungsanordnungen sind zumeist eine Vielzahl von derart mikroprozessorgesteuerten Automatisierungskomponenten im Einsatz, so dass der Energiebedarf dieser Automatisierungskomponenten, also der Steuerungen, einen signifikanten Anteil am gesamten Energiebedarf einer Automatisierungsanordnung hat. Um die Aufnahme an elektrischer Leistung einer Automatisierungsanordnung möglichst weit zu senken, werden daher nicht nur Motoren, Heizungen, Beleuchtungseinrichtungen o.ä. betrachtet bzw. optimiert, sondern es soll auch der Energiebedarf der Steuerungen, also der mikroprozessorgesteuerten Automatisierungskomponenten, soweit als möglich gesenkt werden.

Daher ist es beispielsweise üblich, in Arbeitspausen oder bei temporär nicht genutzten Anlagenteilen die nicht benötigten Steuerungen und damit Automatisierungskomponenten abzuschalten. Dabei werden die aus dem Bereich der Personal-Computer bekannten Zustände "Ruhezustand" oder "Standby-Modus" vermehrt auch für die Automatisierungskomponenten verwendet, d.h., dass entweder ein Mikroprozessor abgeschaltet und nur noch ein Arbeitsspeicher mit Energie versorgt wird (Standby-Modus), oder aber dass ein Arbeitsspeicher-Inhalt temporär auf einer Festplatte oder dgl. gesichert wird, wonach ebenfalls der Mikroprozessor und das gesamte "Motherboard" außer Betrieb gesetzt wird (Ruhezustand). Aus Gründen der Verfügbarkeit können diese Verfahren jedoch bei weitem nicht bei allen Automatisierungsanordnungen genutzt werden.

Die Leistungsaufnahme (Energiebedarf) eines Mikroprozessors kann in einer ersten Näherung als proportional zur Taktfrequenz angenommen werden, mit der der Mikroprozessor betrieben wird (Systemtakt). Es ist daher bei den Personal-Computern, insbesondere bei den batterie- und akkubetriebenen Geräten (z.B. Laptops) bekannt, die Taktfrequenz des Mikroprozessors in Abhängigkeit von der benötigten Rechenleistung zu wählen, wobei im Leerlaufzustand die Taktfrequenz reduziert wird, wogegen bei der Bearbeitung komplexer Aufgaben die Taktfrequenz erhöht wird, wodurch die Leistungsaufnahme und die Verlustleistung wieder steigen. Bei den beschriebenen Personal-Computern ist diese Funktionalität von den Chip-Herstellern vorgesehen und wird durch das jeweilige Betriebssystem gesteuert. Nachteilig ist jedoch, dass insbesondere beim Wechsel von einer niedrigen Taktfrequenz zu einer höheren Taktfrequenz Verzögerungen auftreten können, die bei Personal-Computern zwar oft hingenommen werden, bei industriellen Automatisierungsanordnungen, bei denen oft ein sog. "Echtzeitbetrieb" gefordert ist, jedoch nicht tolerabel sind. Überdies sind die Betriebssysteme und insbesondere auch die Anwenderprogramme von speicherprogrammierbaren Steuerungen und anderen Automatisierungskomponenten oftmals derart ausgestaltet, dass ein Leerlaufzustand nicht eintritt. Dies liegt darin begründet, dass nach einem (schnellstmöglichen) Abarbeiten eines Zyklus' unverzüglich der nächste Zyklus gestartet wird, so dass ein Leerlaufzustand nicht auftritt. Selbst in den Fällen, in denen der nächste Zyklus verzögert gestartet wird, ist es nicht möglich und vorgesehen bzw. möglich, temporär die Taktfrequenz (Systemtakt) zu verringern, ohne Störungen und Verzögerungen in Kauf zu nehmen.

Aus der Druckschrift US 6,298,448 B1 - Shaffer et al. "Apparatus and method for automatic CPU speed control based on application-specific criteria" zeigt ein Verfahren und eine Anordnung zur Anpassung der Taktrate eines Mikroprozessors, wobei abhängig von der für abzuarbeitende Anwendungen jeweils erforderlichen Rechenleistung die Taktrate verändert wird.

Auch die US 2002/0099964 A1 - Zdravkovic "Reducing power consumption by estimating engine load and reducing engine clock speed" zeigt eine dynamische Anpassung der Taktrate eines Mikroprozessors, wobei hier der Füllstand eines Anweisungspuffers über eine erforderliche oder mögliche Anpassung der Taktrate entscheidet.

Es ist daher eine Aufgabe der vorliegenden Erfindung, ein Verfahren und eine Automatisierungskomponente anzugeben, wodurch die Energieaufnahme einer mikroprozessorgesteuerten Automatisierungskomponente unter Berücksichtigung der jeweils geforderten Funktionalität verringert werden kann.

Dabei ist es ein zentraler Gedanke einer Lösung der Aufgabe, den Auslastungsgrad einer Automatisierungskomponente zu bestimmen, danach die erforderliche Rechenleistung festzulegen und dadurch den aus Sicht der Energieeinsparung und aus Sicht der erforderlichen Funktionalität optimalen Wert für die Taktfrequenz des Mikroprozessors zu bestimmen und auf den Mikroprozessor anzuwenden. Dabei wird erfindungsgemäß als Maßstab für die erforderliche Rechenleistung und damit für die erforderliche Taktfrequenz des Mikroprozessors der speicherprogrammierbaren Steuerung bzw. der Automatisierungskomponente die Laufzeit (auch Zeitdauer genannt) des sog. Hauptprogramm-Zyklus' erfasst und als ein Parameter für die Bestimmung der Taktfrequenz verwendet. Der Hauptprogramm-Zyklus wird häufig auch als "Hauptschleife", "Hintergrund-Task" oder im Umfeld der Simatic-Steuerungen als "OB1" (erster Organisations-Baustein) bezeichnet. Im Hauptprogramm-Zyklus werden üblicher Weise die wesentlichen Programmteile zur Steuerung einer Anwendung und damit einer industriellen Automatisierungsanordnung abgearbeitet, so dass mit dessen Laufzeit bzw. Wiederholfrequenz der Grundregelungszyklus einer Steuerung festgelegt wird und daher die Laufzeit ein Maß für die langsamste Reaktionszeit einer Anordnung darstellt. Der Hauptprogramm-Zyklus wird durch höherpriore Ablaufebenen unterbrochen, in denen schnelle Regelungsaufgaben, Bewegungssteuerungen, Prozessreaktionen o.ä. abgebildet werden. Ein höherer Rechenbedarf in den höherprioren Ablaufebenen verlängert damit automatisch die Laufzeit (Zykluszeit) des Hauptprogramm-Zyklus'. Daher ist die Laufzeit des Hauptprogramm-Zyklus' ein Maß für den gesamten aktuellen Rechenbedarf einer Automatisierungskomponente. In Ruhephasen sinkt die Rechenlast automatisch ab, da viele ereignisgesteuerte Berechnungen wegfallen, beispielsweise Peripherie-Alarme, Berechnung von Bewegungsprofilen bei der Bewegungssteuerung, Interrupts etc. Ein Anwender kann diese Effekte verstärken, wenn sein Programm im Ruhezustand einer Maschine alle nicht benötigten Funktionen überspringt. Kurz gesagt ist die geforderte (maximale) Laufzeit (Zyklusdauer) des Hauptprogramm-Zyklus' ein gutes Maß für die erforderliche Rechenleistung und gibt die erforderliche Taktfrequenz des verwendeten Mikroprozessors vor.

Die Lösung der Aufgabe sieht insbesondere ein Verfahren nach Patentanspruch 1 vor, wobei ein Verfahren zur Anpassung der Taktfrequenz eines Mikroprozessors einer industriellen Automatisierungskomponente vorgeschlagen wird. Dabei wird die Taktfrequenz des Mikroprozessors in Abhängigkeit von der benötigten Rechenleistung gewählt, wobei in einem ersten Schritt die derzeit benötigte Zeitdauer für das Abarbeiten des Hauptprogramm-Zyklus' eines auf der Automatisierungskomponente ablaufenden Steuerungsprogramms erfasst wird, in einem zweiten Schritt diese Zeitdauer mit einem vorgegebenen Maximalwert verglichen wird, und in einem dritten Schritt abhängig vom Ergebnis des Vergleichs die neue Taktfrequenz ermittelt und für den Mikroprozessor verwendet wird. Durch eine solche zyklische oder permanente Überwachung der Laufzeit (Ausführungsdauer) des Hauptprogramm-Zyklus' kann auch bei schwankendem Bedarf an Rechenleistung die Taktfrequenz des Mikroprozessors stets so ausgewählt werden, dass diese nicht unnötig hoch ist, andererseits aber auch schnell genug, um eine Ausführung des Hauptprogramm-Zyklus' innerhalb einer geforderten Maximalzeit zu gewährleisten.

Die Lösung der Aufgabe sieht außerdem eine Automatisierungskomponente zur Steuerung einer industriellen Automatisierungsanordnung vor, die mit einem Mikroprozessor mit veränderlicher Taktfrequenz ausgerüstet ist, wobei die Automatisierungskomponente zur Einstellung der Taktfrequenz des Mikroprozessors unter Verwendung des vorgenannten Verfahrens eingerichtet ist.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Automatisierungskomponente.

Vorteilhaft wird für den Vergleich in dem zweiten Schritt ein gefilterter Wert für die Zeitdauer verwendet, der aus einer Mehrzahl erfasster Zeitdauern vorangegangener Durchläufe des Hauptprogramm-Zyklus' gebildet wird. Damit wird ein unerwünschtes Oszillieren der Taktfrequenz, insbesondere bei kurzzeitigen Schwankungen der Laufzeit, vermieden. Dabei hat sich als besonders vorteilhaft herausgestellt, wenn neben der Filterung des Parameters "Laufzeit", beispielsweise durch Mittelwertbildung oder Tiefpass-Filterung, die Anpassung der Taktfrequenz anhand einer Hysterese erfolgt, wobei die Taktfrequenz nur dann geändert wird, wenn anhand des Vergleichs eine neue Taktfrequenz ermittelt wird, welche außerhalb der Hysterese für die bislang gültige Taktfrequenz liegt. Dies ist besonders vorteilhaft, wenn die Taktfrequenz nicht kontinuierlich verstellbar ist, sondern in Stufen. Dann kann für jede Schaltstufe der Taktfrequenz ein Wertepaar (untere Schaltschwelle, obere Schaltschwelle) für die Schalt-Hysterese festgelegt werden. Insbesondere bei zeitkritischen Prozessen kann es sinnvoll sein, dass stets die gemessen an der ermittelten (notwendigen) Taktfrequenzen nächst-höhere Schaltstufe für die Taktfrequenz gewährt wird, wobei vorteilhaft auch ein "Sicherheitsbereich", beispielsweise 10%, der ermittelten erforderlichen Taktfrequenz hinzugerechnet werden kann. Zur Erhöhung der Betriebssicherheit, insbesondere bei Echtzeit-Anforderungen, können die Werte für die Schaltschwellen asymmetrisch um den stationären Wert der Taktfrequenz-Stufe angeordnet sein.

In den Fällen, in denen der Wert für die Laufzeit des Hauptprogramm-Zyklus' gefiltert wird, beispielsweise einer Tiefpassfilterung, ist es vorteilhaft, wenn nach dem Verändern der Taktfrequenz oder Taktfrequenz-Stufe der "Startwert" des Filter Algorithmus' auf denjenigen Wert festgelegt wird, der anhand der neu eingestellten Taktfrequenz für die zukünftige Laufzeit des Hauptprogramm-Zyklus' erwartet wird; dies gilt insbesondere bei einer Mittelwertbildung im Filter.

Ein Ausführungsbeispiel des erfindungsgemäßen Verfahrens wird nachfolgend anhand der Zeichnungen erläutet. Das Ausführungsbeispiel dient gleichzeitig der Erläuterung einer erfindungsgemäßen Automatisierungskomponente. Dabei zeigen:
- Figur 1: ein Blockschaltbild für ein Verfahren zur Anpassung der Taktfrequenz eines Mikroprozessors,
- Figur 2: in einer schematischen Darstellung eine Schaltkennlinie zur Umschaltung der Taktfrequenz oder Taktfrequenz-Stufe, und

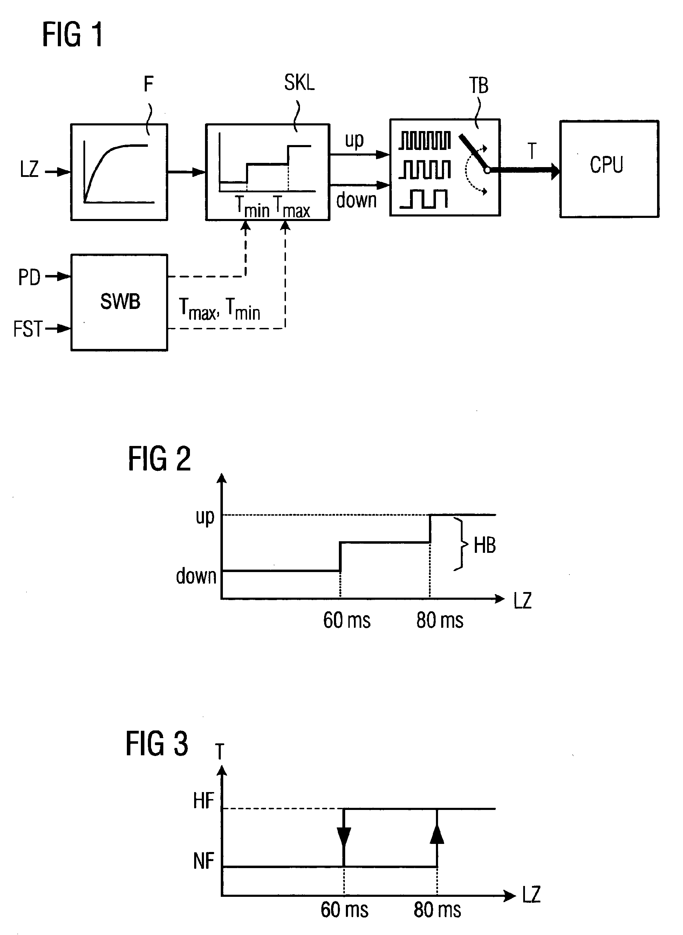

- Figur 2: in einer schematischen Darstellung eine bei der Anpassung einer Taktfrequenz eines Mikroprozessors resultierende Hysterese.

Im Folgenden wird vorausgesetzt, dass ein Anwender eine Kenntnis darüber besitzt, wie lange die Laufzeit eines Hauptprogramm-Zyklus' maximal sein darf, um eine zu steuernde Automatisierung oder einen zu steuernden/regelnden Prozess noch hinreichend schnell steuern oder regeln zu können. Diese Zeitdauer wird im Folgenden und in den Figuren als Prozessdauer PD bezeichnet. Sofern die daraus gebildete Laufzeit LZ (Zykluszeit) jedoch deutlich unter diesem Maximalwert liegt, ist dies ein Zeichen dafür, dass sich ein Prozess in einer Ruhephase befindet oder zumindest die Taktfrequenz in Relation zu der benötigten Rechenleistung unnötig hoch eingestellt ist. In diesem Fall kann die Taktfrequenz (Systemtakt, Prozesstakt) des Mikroprozessors CPU so lange reduziert werden, so lange die Laufzeit LZ oder die Prozessdauer PD unterhalb des Maximalwerts verbleibt. Mit zunehmender Rechenlast jedoch steigt die Laufzeit LZ wieder an, wobei spätestens bei Überschreiten der Maximalzeit die Taktfrequenz wieder erhöht werden muss.

In der Figur 1 ist ein Blockdiagramm dargestellt, anhand dessen im Folgenden die Einstellung einer Taktfrequenz T für den Mikroprozessor CPU einer industriellen Automatisierungskomponente erläutert werden soll.

Prinzipiell stellt das Blockdiagramm der Figur 1 einen digitalen Regler dar, dessen Eingangsgrößen in dieser vereinfachenden Darstellung die aktuelle Laufzeit LZ eines Hauptprogramm-Zyklus' eines Programms darstellt, welches auf dem Mikroprozessor CPU abläuft, wobei weiterhin eine (maximal erlaubte) Prozessdauer PD als Maximalwert vorgegeben wird, und schließlich mögliche Frequenzstufen FST in die Berechnung einfließen, wobei diese Frequenzstufen FST regelmäßig von der verwendeten Hardware vorgegeben sind, d.h., dass gebräuchliche Hauptsystem-Platinen (Motherboard) oft nur die stufenweise Anpassung einer Taktfrequenz zulassen.

Im Folgenden wird das Verfahren für die Bestimmung/Anpassung der Taktfrequenz anhand von Bausteinen/Funktionsbausteinen beschrieben; tatsächlich können diese Vorgänge jedoch innerhalb eines einzelnen Funktionsbausteins oder in einer anders organisierten Software o.ä. berechnet werden. Vorteilhafter Weise werden diese Berechnungen von einer Funktion in einem Betriebssystem der Automatisierungskomponente vorgenommen. Insbesondere wird durch ein solches Betriebssystem auch eine Messung der Laufzeit des Hauptprogramm-Zyklus' vorgenommen. Da gebräuchlicher Weise ein Hauptprogramm-Zyklus ohnehin immer vom Betriebssystem gestartet und das Ende des Hauptprogramm-Zyklus' überwacht bzw. registriert wird, kann das nachfolgend beschriebene Verfahren realisiert werden, ohne das Anwendungsprogramm einer Automatisierungskomponente ändern zu müssen.

In einem Funktionsblock zur Schaltwertbestimmung SWB werden aus der vorgegebenen (maximalen) Prozessdauer PD und aus den vorgegebenen Frequenzstufen FST Grenzwerte Tₘᵢₙ, Tₘₐₓ ermittelt und an einen Baustein zur Bestimmung der Schaltkennlinie SKL übertragen. Diese Schaltkennlinie, auch Schalt-Hysterese genannt, ist in der Figur 2 noch einmal detaillierter dargestellt. Ein weiteres Eingangssignal für den Baustein zur Erstellung der Schaltkennlinie SKL ist das mittels einer Filtereinrichtung F gefilterte "Signal", also ein gefilterter Wert für die Laufzeit LZ. Der Baustein zur Filterung F führt dabei eine Mittelwertbildung oder Tiefpassfilterung durch. Natürlich sind auch komplexere Filter-Algorithmen, je nach Anwendungszweck, denkbar. Ausgangssignale des Bausteins zur Berechnung der Schaltkennlinie SKL sind Befehle "up", "down" zur Erhöhung bzw. zur Verringerung der Taktfrequenz oder Taktrate T, wobei anhand der bereits erwähnten verfügbaren Schaltstufen für die Taktfrequenz in dem Baustein Taktfrequenz-Bestimmung TB je nach Befehl die nächst-höhere oder nächst-niedrigere Stufe für die Taktfrequenz T gewählt wird, wobei dann die entsprechend gewählte Taktfrequenz T auf den Mikroprozessor CPU angewendet wird.

In der Figur 2 ist die im Baustein für die Berechnung oder Bestimmung der Taktfrequenz T verwendete Schaltkennlinie SKL detaillierter dargestellt. Diese Schaltkennlinie SKL ergibt sich aufgrund der vorgegebenen Prozessdauer PD bzw. einer der daraus berechneten maximalen Laufzeit Tₘₐₓ und variiert in einer vorteilhaften Ausgestaltung mit der verwendeten Taktfrequenzstufe. Der Maximalwert Tₘₐₓ stellt dabei in den meisten Fällen keine absolute Obergrenze dar, deren Überschreitung möglicherweise fatale Auswirkungen auf einen zu steuernden Prozess hätte. Sporadische, geringe Überschreitungen sind je nach einem Anforderungsprofil in den meisten Fällen nicht ungewöhnlich und können oft toleriert werden. Die ermittelte Maximalzeit Tₘₐₓ entspricht in diesen Fällen der beispielsweise mittels des Filters F bestimmbaren mittleren Laufzeit LZ des Hauptprogramm-Zyklus', die sich im sog. "worst case"-Betrieb einstellen kann, also beispielsweise unter Volllast o.ä. Bei Bedarf, insbesondere bei der Steuerung zeitkritischer Prozesse, kann als Maximalwert Tₘₐₓ auch ein Wert verwendet werden, der unterhalb der von einem Anwender angegebenen maximalen Prozessdauer PD liegt, beispielsweise bei 90% der vom Anwender angegebenen Grenze. Sobald die Laufzeit LZ, ggf. als gefilterter Wert, unter die Grenze Tₘᵢₙ fällt (in der Figur 2 sind das 60ms), kann die Taktfrequenz des Mikroprozessors CPU reduziert werden ("down"); umgekehrt wird der Schaltbefehl "up" bei einer zu langen Laufzeit LZ gegeben. Der Wert für Tₘᵢₙ hängt dabei von der nächst-niedrigeren einstellbaren Taktfrequenz T des Mikroprozessors CPU ab, kann also von Schaltstufe zu Schaltstufe variieren. Tₘᵢₙ wird dabei derart gewählt, dass sich nach einer Taktreduzierung bei unverändertem Rechenbedarf eine neue Laufzeit (Zykluszeit) LZ etc. ergibt, die zwischen Tₘᵢₙ (hier: 60ms) und Tₘₐₓ (hier: 80ms) liegt. Ggf. müssen also bei einem Wechsel auch mehrere Taktfrequenz-Stufen übersprungen werden oder das Verfahren mehrfach hintereinander angewendet werden. Solange die Laufzeit LZ zwischen dem Minimal- und dem Maximalwert liegt, verbleibt die Schaltkennlinie im Hysteresebereich HB. Dies bedeutet, dass in diesem Bereich keine Änderung der Taktfrequenz T bzw. der verwendeten Taktfrequenzstufe initiiert wird.

In der Figur 3 ist das aus der Schaltkennlinie SKL mit dem Hysteresebereich HB gemäß der Figur 2 resultierende Reglerverhalten für die Taktfrequenz T dargestellt. Entsprechend der Schaltkennlinie SKL führen Laufzeiten LZ kleiner (oder gleich) 60ms zu einer niedrigeren Taktfrequenz T (NF), während Laufzeiten LZ größer (oder gleich) 80ms zu einer höheren Taktfrequenz T (HF) führen; die in der Figur 2 dargestellte Schalt-Hysterese führt also unmittelbar zu einer Taktfrequenz-Hysterese. Durch eine geeignet eingestellte Hysterese wird ein unerwünschtes Schwingen der Taktfrequenz T vermieden.

Da sich aufgrund einer Umschaltung der Taktfrequenz für den gefilterten Wert der Laufzeit LZ erst verzögert ein neuer, stationärer Wert für die Laufzeit LZ (gefiltert) ergeben würde, soll vermieden werden, dass nach Umschaltung weiterhin mit dem bisherigen gefilterten Laufzeitwert LZ gerechnet wird. Zum möglichst schnellen "Einschwingen" des gefilterten Wertes wird dabei die oben erwähnte Maßnahme ergriffen, die das "Vorbesetzen" des gefilterten Wertes auf den anhand der neuen Taktfrequenz erwarteten Wert zum Inhalt hat.

Insbesondere bei großen, komplexen Automatisierungsanordnungen kann es in einer alternativen Ausführungsform sinnvoll sein, keinen festen Wert für die maximale Prozessdauer PD bzw. die maximale Laufzeit Tₘₐₓ vorzugeben, sondern diesen Wert durch andere Komponenten dynamisch zu erzeugen und beispielsweise mittels eines Datentelegramms ("Profi-Energy-Telegramm") zu übermitteln. Dadurch kann beispielsweise eine übergeordnete Anlagenverwaltung die Automatisierungskomponente gezielt in einen Zustand mit einer geringeren Energieaufnahme oder mit einer höheren Leistungsfähigkeit schalten.

## Patentansprüche

1. Verfahren zur Anpassung der Taktfrequenz (T) eines Mikroprozessors (CPU) einer industriellen Automatisierungskomponente,
wobei die Taktfrequenz (T) des Mikroprozessors (CPU) in Abhängigkeit von einer benötigten Rechenleistung gewählt wird, **dadurch gekennzeichnet, dass**
- in einem ersten Schritt die benötigte Zeitdauer (LZ) für das Abarbeiten des Hauptprogramm-Zyklus' eines auf der Automatisierungskomponente ablaufenden Steuerungsprogramms erfasst wird,
- in einem zweiten Schritt diese Zeitdauer (LZ) mit einem Maximalwert (PD) verglichen wird, und
- in einem dritten Schritt abhängig vom Ergebnis des Vergleichs die neue Taktfrequenz (T) ermittelt und für den Mikroprozessor (CPU) verwendet wird.

2. Verfahren nach Patentanspruch 1,
**dadurch gekennzeichnet, dass**
die für den Vergleich verwendete Zeitdauer (LZ) aus einer Mehrzahl erfasster Zeitdauern (LZ) für eine Mehrzahl an Durchläufen des Hauptprogramm-Zyklus' gebildet wird.

3. Verfahren nach einem der vorhergehenden Patentansprüche,
**dadurch gekennzeichnet,**
**dass** für die Taktfrequenz (T) Taktfrequenz-Stufen festgelegt werden, wobei
im dritten Schritt als die zu verwendende Taktfrequenz (T) die dazu nächst-höhere Taktfrequenz-Stufe für den Mikroprozessor verwendet wird.

4. Verfahren nach einem der vorhergehenden Patentansprüche,
**dadurch gekennzeichnet,**
**dass** die Anpassung der Taktfrequenz (T) anhand einer Hysterese erfolgt, wobei die Taktfrequenz (T) in den Fällen geändert wird, in denen anhand des Vergleichs eine neue Taktfrequenz (T) ermittelt wird, welche außerhalb der Hysterese für die bislang gültige Taktfrequenz (T) liegt.

5. Verfahren nach einem der vorhergehenden Patentansprüche,
**dadurch gekennzeichnet,**
**dass** der ermittelte Wert für die neue Taktfrequenz (T) vor seiner Anwendung gefiltert wird.

6. Verfahren nach Patentanspruch 5,
**dadurch gekennzeichnet,**
**dass** durch die Filterung der ermittelten Taktfrequenz (T) kurzzeitige und/oder geringfügige Überschreitungen der Zeitdauer (LZ) über den Maximalwert (PD) die neu zu verwendende Taktfrequenz (T) nicht beeinflussen.

7. Verfahren nach einem der vorhergehenden Patentansprüche,
**dadurch gekennzeichnet,**
**dass** der Maximalwert (PD) durch einen Anwender oder durch eine weitere Steuerungseinrichtung vorgebbar ist.

8. Verfahren nach einem der Patentansprüche 2 bis 7,
**dadurch gekennzeichnet,**
**dass** nach einer Anpassung der Taktfrequenz (T) das Filter auf einen mittleren Wert für die Zeitdauer (LZ) voreingestellt wird, wobei der voreingestellte Wert ein Schätzwert für die mit der neu eingestellten Taktfrequenz (T) erwartete zukünftige Zeitdauer (LZ) ist, wobei der Schätzwert anhand der bisherigen Zeitdauer (LZ), der bisherigen Taktfrequenz (T) und der neu eingestellten Taktfrequenz (T) berechnet wird.

9. Automatisierungskomponente für eine industrielle Automatisierungsanordnung,
mit einem Mikroprozessor (CPU) mit veränderlicher Taktfrequenz (T),
**dadurch gekennzeichnet,**
**dass** die Automatisierungskomponente zur Einstellung der Taktfrequenz (T) des Mikroprozessors (CPU) zur Ausführung eines der vorstehenden Verfahren eingerichtet ist.

## Claims

1. Method for matching the clock frequency (T) of a microprocessor (CPU) of an industrial automation component,
the clock frequency (T) of the microprocessor (CPU) being selected depending on a required computation power,
**characterized in that**
- in a first step, the required duration (LZ) for execution of the main program cycle of a control program running on the automation component is detected,
- in a second step, this duration (LZ) is compared with a maximum value (PD), and
- in a third step, the new clock frequency (T) is determined depending on the result of the comparison and used for the microprocessor (CPU).

2. Method according to Patent Claim 1,
**characterized**
**in that**
the duration (LZ) used for the comparison is formed from a plurality of detected durations (LZ) for a plurality of runs of the main program cycle.

3. Method according to one of the preceding patent claims,
**characterized**
**in that** clock frequency steps are established for the clock frequency (T), wherein, in the third step, the clock frequency (T) which is intended to be used for the microprocessor is the next highest clock frequency step in relation thereto.

4. Method according to one of the preceding patent claims,
**characterized**
**in that** matching of the clock frequency (T) is performed using a hysteresis, with the clock frequency (T) being varied in the cases in which, using the comparison, a new clock frequency (T) is determined which is outside the hysteresis for the previously valid clock frequency (T).

5. Method according to one of the preceding patent claims,
**characterized**
**in that** the determined value for the new clock frequency (T) is filtered prior to use.

6. Method according to Patent Claim 5,
**characterized**
**in that**, owing to the filtering of the determined clock frequency (T), any instances of the duration (LZ) exceeding the maximum value (PD) for a short period of time and/or slightly do not influence the new clock frequency (T) to be used in any way.

7. Method according to one of the preceding patent claims,
**characterized**
**in that** the maximum value (PD) is predeterminable by a user or by a further control device.

8. Method according to one of Patent Claims 2 to 7,
**characterized**
**in that**, after matching of the clock frequency (T), the filter is preset to a mean value for the duration (LZ), with the preset value being an estimated value for the future duration (LZ) expected with the newly set clock frequency (T), the estimated value being calculated using the previous duration (LZ), the previous clock frequency (T) and the newly set clock frequency (T).

9. Automation component for an industrial automation arrangement,
having a microprocessor (CPU) with a variable clock frequency (T),
**characterized**
**in that** the automation component is designed to set the clock frequency (T) of the microprocessor (CPU) for implementing one of the above methods.

## Revendications

1. Procédé d'adaptation de la fréquence (T) d'horloge d'un microprocesseur ( CPU ) d'un composant d'automatisation industriel,
dans lequel on choisit la fréquence ( T ) d'horloge du microprocesseur ( CPU ) en fonction d'une puissance de calcul dont on a besoin,
**caractérisé en ce que**
- dans un premier stade, on détecte la durée ( LZ ) dont on a besoin pour l'élaboration du cycle de programme principal d'un programme de commande se déroulant sur le composant d'automatisation,
- dans un deuxième stade, on compare cette durée ( LZ ) à une valeur ( PD ) maximum, et
- dans un troisième stade, on détermine, en fonction du résultat de la comparaison, la nouvelle fréquence ( T ) d'horloge et on l'utilise pour le microprocesseur ( CPU ).

2. Procédé suivant la revendication 1,
**caractérisé en ce que**
on forme la durée ( LZ ) utilisée pour la comparaison à partir d'une multiplicité de durées ( LZ ) détectées pour une multiplicité de déroulements du cycle de programme principal.

3. Procédé suivant l'une des revendications précédentes,
**caractérisé**
**en ce que** l'on fixe des paliers de fréquence d'horloge pour la fréquence ( T ) d'horloge, dans lequel
dans le troisième stade, on utilise, comme fréquence ( T ) d'horloge à utiliser, le palier de fréquence d'horloge immédiatement le plus haut pour le microprocesseur.

4. Procédé suivant l'une des revendications précédentes,
**caractérisé**
**en ce que** l'on effectue l'adaptation de la fréquence ( T ) d'horloge au moyen d'une hystérésis, la fréquence ( T ) d'horloge étant modifiée dans les cas, dans lesquels on détermine, au moyen de la comparaison, une nouvelle fréquence ( T ) d'horloge, qui est à l'extérieur de l'hystérésis pour la fréquence ( T ) d'horloge valable jusqu'ici.

5. Procédé suivant l'une des revendications précédentes,
**caractérisé**
**en ce que** l'on filtre la valeur déterminée pour la nouvelle fréquence ( T ) d'horloge avant son utilisation.

6. Procédé suivant la revendication 5,
**caractérisé**
**en ce que**, par le filtrage de la fréquence ( T ) d'horloge déterminée, des dépassements de courte durée et/ou petits de la durée ( LZ ) au-delà de la valeur ( PD ) maximum n'influencent pas la fréquence ( T ) d'horloge à utiliser nouvellement.

7. Procédé suivant l'une des revendications précédentes,
**caractérisé**
**en ce que** la valeur ( PD ) maximum peut être prescrite par un utilisateur ou par un autre dispositif de commande.

8. Procédé suivant l'une des revendications 2 à 7,
**caractérisé**
**en ce que**, après une adaptation de la fréquence ( T ) d'horloge, on règle à l'avance le filtre sur une valeur moyenne pour la durée ( LZ ), la valeur réglée à l'avance étant une valeur estimée de la durée ( LZ ) à venir escomptée avec la fréquence ( T ) d'horloge établie nouvellement, la valeur d'estimation étant calculée au moyen de la durée ( LZ ) jusqu'ici de la fréquence ( T ) d'horloge jusqu'ici et de la fréquence ( T ) d'horloge établie nouvellement.

9. Composant d'automatisation pour un agencement industriel d'automatisation,
comprenant un microprocesseur ( CPU ) ayant une fréquence ( T ) d'horloge variable,
**caractérisé**
**en ce que** le composant d'automatisation est conçu pour l'établissement de la fréquence ( T ) d'horloge du microprocesseur ( CPU ) en vue de la réalisation du procédé précédent.
